# FASCICULE DE BREVET EUROPEEN

(11) **EP 0 653 293 B1**
(45) Date de publication et mention de la délivrance du brevet: **25.08.1999**
(21) Numéro de dépôt: 94116737.1
(22) Date de dépôt: 24.10.1994
(51) Int. Cl.: B29D 30/06, B29C 33/30

(54) **Moule pour pneumatique, et procédé de moulage du pneumatique**
Reifenform und Verfahren zum Formen eines Reifens
Mold for tyre and method of forming a tyre

(30) Priorité: 12.11.1993 FR 9313523
(43) Date de publication de la demande: 17.05.1995
(73) Titulaire: SEDEPRO, F-75015 Paris (FR)
(72) Inventeur: Soulalioux, Alain, F-63000 Clermont-Ferrand (FR)
(74) Mandataire: Bauvir, Jacques

(56) Documents cités:
- EP-A- 0 451 832
- EP-A- 0 514 161
- DE-A- 1 933 816
- DE-A- 2 113 698

## Description

La présente invention concerne le moulage des pneumatiques, en particulier le moulage de la bande de roulement de ceux-ci.

Afin d'assurer un moulage d'excellente qualité, il faut respecter de nombreuses conditions. L'une de ces conditions concerne spécifiquement l'opération de démoulage de la sculpture qui doit imposer aussi peu de contraintes que possible au pneumatique, sous peine de provoquer des perturbations, notamment dans l'architecture de renforcement de celui-ci. Cela conduit à préférer les moules dits "à secteurs", illustrés par exemple par le brevet EP-0 451 832 plutôt que les moules dits "en 2 parties", comme par exemple celui décrit dans le brevet US 2 874 405.

En outre, il est souhaitable que, surtout au niveau de la bande de roulement, il n'y ait pas de bavure due au caoutchouc ayant pu fluer entre deux éléments moulants, par exemple entre deux secteurs. C'est pour cette raison que, en règle générale, on ferme le moule (secteurs tous jointifs) avant d'imposer au pneumatique cru un supplément de conformation. Ce supplément de conformation est obtenu par augmentation de la pression prévalant dans la membrane de vulcanisation, ce qui fait pénétrer le caoutchouc de la bande de roulement dans les éléments moulant la sculpture.

Or, dans certaines architectures récentes de pneumatiques, comportant des renforts à zéro degré dans le sommet, il est difficile, voire impossible d'envisager un supplément de conformation en presse de vulcanisation. Le pneu cru est alors assemblé à une cote plus proche ou sensiblement égale à la cote du pneu moulé et vulcanisé. Dès lors, la pénétration des éléments moulants dans le caoutchouc peut se produire avant la position de fermeture. Cela entraine un flux de caoutchouc dans le sens périphérique, ce qui peut entrainer des bavures importantes aux plans de joints entre secteurs.

Pour remédier à ce problème, on a jusqu'à maintenant agi sur la conception de la sculpture : report des témoins d'usures aux interfaces entre secteurs ou diminution du taux d'entaillement des sculptures lorsqu'on se rapproche des bords de secteurs. Ceci permet d'augmenter le volume de caoutchouc de la sculpture à ces endroits, pour absorber de petits flux périphériques de gomme. Ce ne sont là que des palliatifs ne contribuant pas à augmenter la qualité des pneumatiques ou des bandes de roulement fabriquées.

Ces contraintes de moulage résultent du fait que, dans un moule à secteurs, puisque chaque secteur couvre un angle relativement important, le moulage n'est purement radial que dans la zone médiane de chaque secteur. En observant le mouvement d'avance des secteurs, on constate que le moulage n'est radial que au niveau du plan médian de chaque secteur. Le moulage se fait dans une direction formant un certain angle par rapport à la direction radiale, angle d'autant plus grand que l'on s'éloigne, dans la direction circonférentielle, de cette position médiane, pour rejoindre les bords des secteurs. La valeur maximale de cet angle correspond en général à la moitié du développement angulaire du secteur.

En développant cette observation pour les moules comportant de nombreux motifs successifs le long du périmètre, comme c'est le cas généralement pour les pneus de véhicules de tourisme, on remarque que, dans les moules dits "à secteurs", le nombre de secteurs reste considérablement plus faible que le nombre de motifs successifs, ce qui conduit à une dimension circonférentielle de chaque secteur relativement grande (typiquement un huitième du périmètre pour un pneu pour voitures de tourisme).

Même si ce type de moule apporte un progrès considérable par rapport aux moules en deux parties, dépourvus de tout mouvement radial à l'ouverture ou à la fermeture, on ne peut pas véritablement considérer que les moules à secteurs réalisent un moulage radial de la bande de roulement. En considérant un secteur du moule, si l'on suppose qu'on le déplace radialement par rapport à l'axe du moule, cela signifie que le déplacement réel relevé est, en tout point de la surface moulante du secteur considéré, parallèle à un rayon. On ne réalise un mouvement purement radial au niveau de la surface moulante que pour une seule position circonférentielle. Le mouvement réel s'écarte de la direction radiale théorique pour tout autre point de la surface moulante.

Autrement dit, seuls les points de ladite surface moulante coupant le rayon de référence du déplacement radial considéré décrivent un mouvement radial pur. Tous les autres points décrivent un mouvement parallèle audit rayon, et plus ou moins éloigné de celui-ci.

Ce mouvement se décompose donc en une composante radiale et une composante circonférentielle, cette dernière étant indésirable et pouvant être qualifiée de composante "induite". En observant, pendant une course radiale correspondant sensiblement à la profondeur de sculpture, sur un secteur, quelle est l'ampleur de ce déplacement induit qui suit une composante circonférentielle au lieu d'une direction radiale pure, on constate que ladite composante circonférentielle atteint une valeur de l'ordre de 0.2 % du périmètre moulé, dans le cas d'un moule classique comportant huit secteurs.

Ce mouvement circonférentiel induit provoque, lors du moulage, des flux de caoutchouc orientés vers les bords circonférentiels des secteurs, c'est à dire vers l'interface entre les secteurs adjacents. Ce mouvement parasite contribue à faire apparaitre les bavures de moulage qui apparaissent sur la bande de roulement d'un pneu vulcanisé. Un objectif de l'invention est de corriger ces défauts de moulage que constituent les bavures.

La demande de brevet EP 0 242 840 décrit un moule complètement rigide comportant une couronne périphérique de secteurs pour mouler la bande de roulement, deux coquilles latérales pour mouler les flancs (surfaces extérieures du pneumatique) et un noyau rigide pour mouler la surface intérieure du pneumatique. Puisqu'il n'y a plus de supplément de conformation, l'emploi de ce moule libère le concepteur de pneu d'une contrainte spécifique à cette phase du moulage. La conception totalement rigide de ce moule apporte de nombreux avantages quant à la qualité du pneumatique moulé car les formes géométriques obtenues sont d'une grande qualité (excellente circularité, en toute position transversale). Cependant, le moulage à volume imposé oblige à respecter des tolérances très étroites sur le volume de l'ébauche crue du pneumatique.

Un autre objectif de l'invention est de pouvoir conserver l'avantage du moule rigide du point de vue du respect et de la parfaite maîtrise de la qualité géométrique des pneumatiques fabriqués avec ce type de moule, tout en rendant l'opération de moulage moins sensible aux dispersions de volume entre les ébauches crues des pneumatiques à mouler et à vulcaniser successivement dans le même moule.

Le moule de la présente invention, non seulement permet d'atteindre ces objectifs, mais aussi apporte une amélioration de portée générale au moulage et au démoulage des pneumatiques, que l'on fasse ou non appel à un noyau rigide pour mouler la cavité intérieure du pneumatique.

La présente invention propose un moule pour bande de roulement de pneumatique, définissant en position de moulage un anneau continu comportant un relief composé de motifs successifs répétitifs dans le sens circonférentiel, lesdits motifs assurant le moulage de la sculpture sur la surface radialement extérieure de la bande de roulement, ladite sculpture ayant un pas de sculpture où apparaissent des sillons transversaux, ledit moule étant constitué d'éléments monobloc individuels, chacun desdits éléments ayant un développement circonférentiel correspondant au plus à deux motifs adjacents, lesdits éléments étant groupés dans le moule pour assurer le moulage de ladite bande de roulement par la face radialement intérieure de chaque élément, caractérisé en ce que lesdits éléments sont mobiles individuellement, selon une direction de rapprochement ou d'éloignement de l'axe du moule au moins sur une course finale de moulage, lesdits éléments étant également mobiles les uns par rapport aux autres au moins pendant qu'ils se déplacent le long de ladite course finale.

Si l'on considère un moule conportant par exemple trente éléments mobiles individuellement, réalisé selon ce qui est proposé par la présente invention, alors en reprenant l'analyse du mouvement de la surface moulante faite ci-dessus, on constate que ladite composante circonférentielle induite ne dépasse pas 0.04 % du périmètre. On constate que la différence entre les composantes circonférentielles extrèmes du déplacement relevé en tout point de la surface moulante est bien plus faible que ce que l'on obtient couramment dans l'état de la technique. Or le nombre de trente éléments constitue en fait le plus souvent, suivant les constations expérimentales effectuées, une limite inférieure dans la réalisation pratique de l'invention.

Ainsi, conformément à un autre aspect de l'invention, lesdits éléments ont une dimension circonférentielle suffisamment faible pour que la différence entre les composantes circonférentielles extrêmes du déplacement observé en tous points de la surface moulante de chaque élément soit inférieure à 0.04 % du périmètre de moulage.

Suivant cet aspect de l'invention, on peut considérer que le mouvement est très sensiblement radial en toutes positions circonférentielles à la surface moulante desdits éléments. Cela limite efficacement les flux parasites de gomme lors du moulage.

Suivant une variante avantageuse, le moule est caractérisé en ce qu'il comporte des moyens assurant une répulsion élastique entre éléments.

Les éléments dont il est question ici présentent une épaisseur (dimension dans le sens circonférentiel) telle que, aux sollicitations de service, ils ne se déforment pas élastiquement. Cela signifie que leur élasticité ne joue aucun rôle fonctionnel dans la présente invention. Ce ne sont pas des tôles adjacentes, de sorte que leur nombre reste inférieur dans tous les cas à 250.

L'invention trouve une utilisation pour la fabrication de bandes de roulement annulaires telles qu'elles sont utilisées à l'état prévulcanisé dans certaines méthodes de rechapage à froid. Dans ce cas, la semelle de la bande de roulement est moulée par une membrane ou par une forme rigide.

L'invention peut aussi être utilisée pour le moulage d'un pneumatique. Dans ce cas, le moule comporte aussi des moyens de moulage des flancs, par exemple des coquilles telles que bien connues. La cavité interne du pneumatique peut être moulée par une membrane ou par un noyau rigide, l'invention étant compatible avec les deux méthodes.

Les figures suivantes illustrent deux modes de réalisation de l'invention lorsqu'elle est appliquée à la fabrication des pneumatiques, ce qui suffira largement pour que l'homme du métier en saisisse tous les avantages.
La figure 1 est une coupe méridienne d'un moule selon l'invention.
La figure 2 est une coupe perpendiculaire à l'axe de rotation, selon II II, à la figure 1.
Les figures 3 et 4 sont des vues similaires à la figure II, représentant deux stades différents d'ouverture du moule.
La figure 5 montre un détail de réalisation.
La figure 6 illustre une seconde variante de réalisation de l'invention.
La figure 7 montre le moule de la seconde variante, en phase d'ouverture.

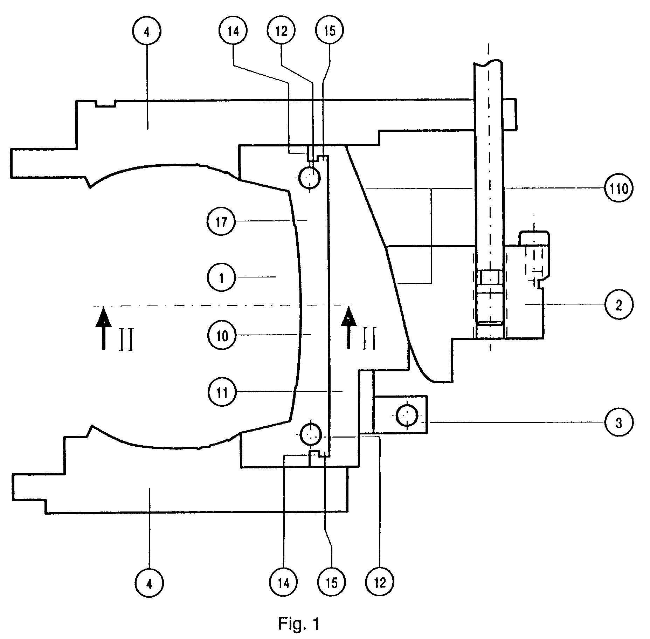

A la figure 1, on voit un anneau continu 1 destiné à mouler la surface radialement extérieure de la bande de roulement. Celui-ci est constituée de secteurs 11, dont le nombre est en général compris entre cinq et vingt, sur lesquels sont montés des éléments 10 de moulage de la sculpture.

On choisit la taille de ces éléments dans le sens circonférentiel de façon à constituer un motif démoulable. On entend par cela que le démoulage puisse s'effectuer selon une seule direction de démoulage, en ne causant que des déformations élastiques faibles au caoutchouc venant d'être moulé et vulcanisé.

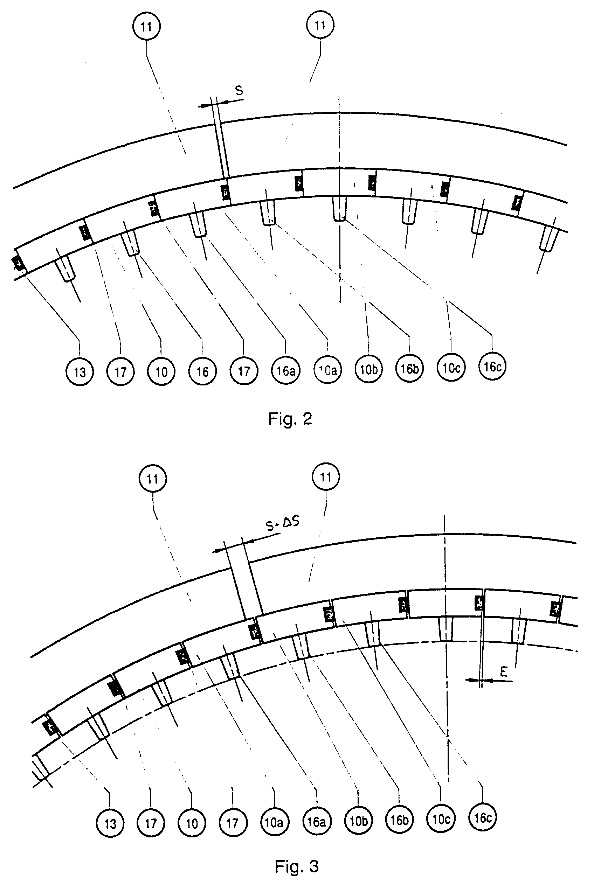

Dans de nombreux cas, le motif démoulable peut correspondre au pas de sculpture, notion classique en conception de sculpture pour bandes de roulement de pneumatiques. En général, pour la plupart des sculptures, il existe alors une direction de démoulage pour laquelle tous les éléments 10 sont dépourvus de contre-dépouille, C'est ce qui est représenté aux figures 2 à 4. Cependant, un élément sur lequel figurent deux motifs de sculpture adjacents constituera encore souvent un motif démoulable.

Chaque élément peut être obtenu de toute manière convenable. En particulier, les méthodes de fabrication d'éléments par fonderie d'aluminium, largement répandues dans l'industrie du pneumatique, conviennent. La forme exacte de ces éléments, vus depuis l'axe central du moule, peut suivre les motifs de sculptures prévus par le concepteur du pneu (faces transversales non nécessairement planes).

On peut aussi disposer plusieurs éléments séparés transversalement, comme cela apparaît dans la demande de brevet EP 0 451 832. Dans ce cas, lesdits éléments sont répartis en un ou plusieurs groupes adjacents axialement, de telle sorte que, à l'intérieur d'un groupe, ils sont tous mobiles selon une direction faisant le même angle par rapport à la direction radiale. Lesdits moyens assurant une répulsion élastique sont disposé entre les éléments d'un même groupe, un groupe étant constitué par une rangée circonférentielle d'éléments.

Revenant à la figure 1, on voit que le moule comporte un seul élément 10 transversalement. Le dos de chaque secteur 11 comporte deux portées tronconiques 110. Chaque élément 10 est enfilé sur son secteur 11 grâce à deux rainures latérales 14 prévues sur chaque secteur 11, et à des tenons 15 correspondants réalisés sur la face arrière de chaque élément 10. On aperçoit aussi deux coquilles 4 pour le moulage des flancs, ainsi qu'un oeilleton 3 au dos du secteur 11, et une frette conique 2, mobile axialement.

Le recul radial en position d'ouverture de chaque secteur 11 est obtenu en dégageant la frette conique 2 pour déverrouiller le moule, puis en tirant sur chaque secteur 11 via l'oeilleton 3. La fermeture de l'ensemble des secteurs 11 est obtenue en déplaçant axialement la frette 2, qui agit sur les portées tronconiques 110 au dos de chaque secteur 11, et assure un verrouillage robuste du moule. Tous ces mouvements sont classiques et il n'est point besoin de les décrire en détail.

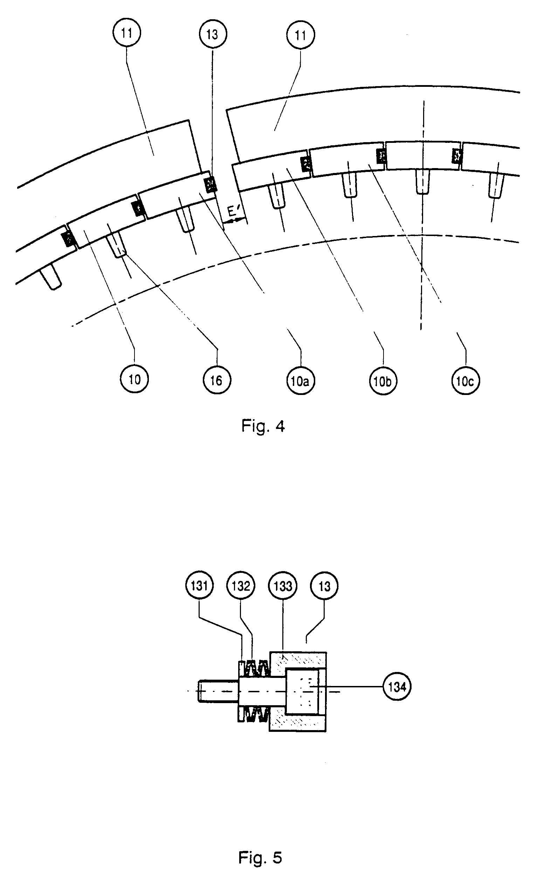

L'une des faces transversales 17 de chaque élément 10 (voir figures 2, 3, et 4) comporte deux logements 12 de part et d'autre du plan de symétrie II-II (voir figure 1) recevant un organe 13 capable d'assurer une force de répulsion entre éléments. Celui-ci est représenté en détails à la figure 5.

L'organe 13 comporte une collerette 131 destinée à prendre appui sur le fond d'un logement 12. Il comporte une tête 133, et un empilage de rondelles belleville 132. Il est fixé sur le fond d'un logement 12 en vissant un boulon 134. Le logement 12 est creusé de façon à ce que le boulon 134 n'affleure pas, tout en permettant à la tête 133 de faire légèrement saille par rapport à la face transversale 17, lorsque l'organe 13 est monté mais non sollicité. De la sorte, les réactions d'appui desdits éléments 10 les uns sur les autres, c'est-à-dire les réactions d'appui orientées circonférentiellement, tendent en permanence à écarter les éléments 10 les uns par rapport aux autres.

A la figure 2, tous les secteurs 11 du moule sont en position de fermeture. Ils sont séparés les uns des autres d'une distance S. On voit que tous les éléments 10 sont jointifs, à un petit jeu près, dont le rôle est d'assurer l'éventation du moule.

A la figure 3, les secteurs 11 ont tous reculé d'une course donnée, qui de préférence correspond à la profondeur de sculpture. On voit que les secteurs 11 se sont séparés les uns des autres d'une distance supplémentaire ΔS due au recul. Contrairement à ce qui se serait produit avec un moule à secteurs tel que ceux de l'état de la technique, on ne retrouve pas cette distance ΔS au niveau de la surface moulante du moule. Les éléments moulant 10 sont tous restés équidistants. L'écart E qui les sépare vaut quelques dizièmes de millimètres. Cela est rendu possible par le glissement de la plupart des éléments 10 dans les rainures 14 des secteurs (voir figure 1), sous l'action des organes de répulsion 13 développant une force suffisante pour vaincre les forces de frottement existantes. Notons que celles-ci sont assez faibles car, au moins pendant ladite course aussi bien en phase de moulage que de démoulage, la pression radiale que le caoutchouc exerce sur le moule est faible ou nulle.

Ensuite, le moule peut continuer son mouvement d'ouverture en poursuivant le recul des secteurs 11, pour atteindre, ou passer par une position telle que celle représentée par la figure 4. Cette fois, pendant le mouvement, tous les éléments 10 restent immmobiles par rapport au secteur 11 sur lequel ils sont montés. L'écart E' entre éléments de bords des secteurs adjacent peut librement grandir, sans que cela ne puisse avoir une incidence quelconque sur l'opération de démoulage de la bande de roulement.

Revenons à l'observation comparée des figures 2 et 3. On a représenté une nervure 16 sur chaque élément 10. Pendant la course correspondant à la profondeur de sculpture, on voit bien que la direction du mouvement de tous les éléments 10 est toujours sensiblement radiale en tout point de la surface moulante, en raison de la faible dimension circonférentielle de chaque élément 10.

On comprend ainsi que le volume de caoutchouc qui, au cours d'une opération de moulage, se trouve pincé entre les nervures 16a et 16b appartenant à des secteurs différents est le même que celui pincé entre les nervures 16b et 16c appartenant au même secteur (compte non tenu du caractère variable du pas de certaines sculptures). En tout état de cause, le volume théorique disponible entre les nervures 16 de n'importe quelle paire d'éléments 10 adjacents correspond au volume de caoutchouc réellement emprisonné par lesdites nervures 16 lors du moulage.

De façon plus générale, la direction de moulage et de démoulage est une direction de rapprochement ou d'éloignement de l'axe du moule. Elle n'est pas nécessairement radiale, mais peut former un angle non nul par rapport à la direction radiale si cela s'avère plus intéressant. Certaines sculptures présentent en effet des incisions non rayonnantes, comme les lamelles des pneus de type M+S 100 commercialisés par MICHELIN.

Au cas où le moule, vu en section radiale, comporte plusieurs éléments adjacents axialement, on dit par convention qu'il comporte plusieurs groupes d'éléments. On peut choisir de le réaliser de la sorte par exemple pour suivre un pas de sculpture qui serait différent à gauche et à droite du pneu. On peut contrôler les directions de moulage/démoulage séparément dans chaque groupe. C'est à l'intérieur de chaque groupe que tous les éléments en faisant partie vont tous suivre la même direction de rapprochement ou d'éloignement de l'axe du moule.

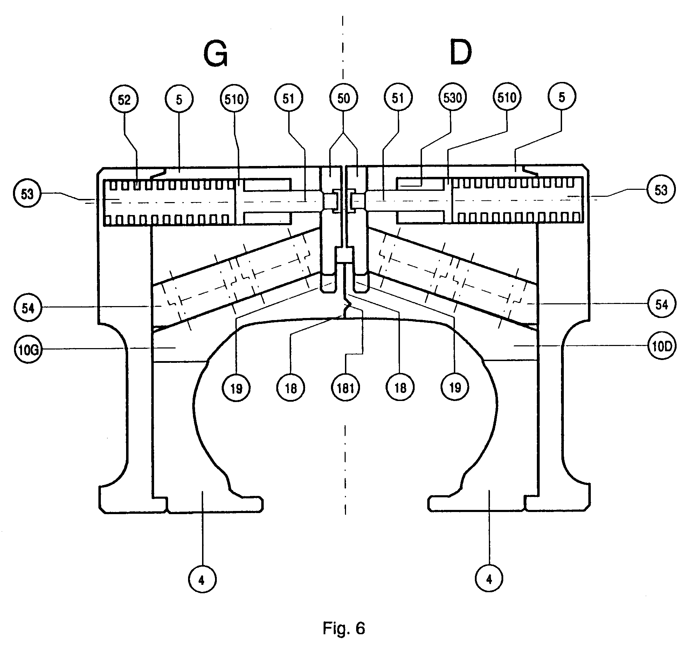

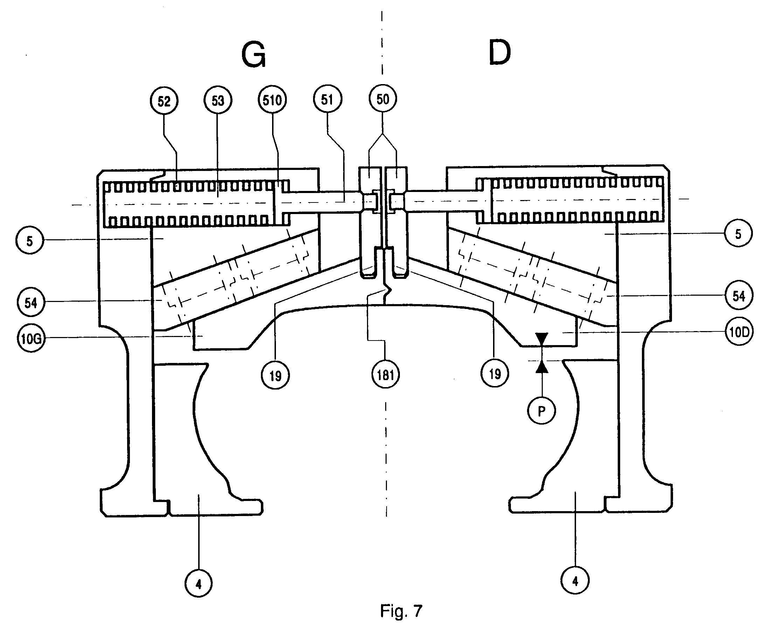

On vient de décrire une première variante de réalisation dans laquelle chaque élément s'étend transversalement sur toute la largeur de ladite couronne, c'est à dire d'une épaule à l'autre du pneu. Les figures 6 et 7 illustrent une autre variante de réalisation de l'invention, dans laquelle on a divisé l'anneau assurant le moulage de la sculpture en deux parties G et D. Chacune de celles-ci comporte, transversalement, un seul élément 10G ou 10D. Cette disposition n'est pas limitative ; Il pourrait y avoir plusieurs groupes d'éléments sur l'une des parties ou sur les deux parties G et D. Dans le sens périphérique, à l'instar de la première variante, chaque partie comporte un grand nombre d'éléments moulants 10G ou 10D, par exemple autant qu'il y a de motifs de sculpture.

Cela permet de réaliser un moule communément désigné par l'appellation "en deux parties", qui se séparent en deux moitiés sensiblement identiques lors de l'ouverture nécessaire au démoulage.

Ce type de moule, qui était d'usage courant pour mouler les pneus diagonaux, a été abandonné au profit du moule dit "à secteurs" lors du passage aux pneus radiaux, car il est préférable dans ce cas de pouvoir éloigner radialement les secteurs lors du démoulage. Cependant, le moule proposé par la présente invention, dans sa version en deux parties, permet de combiner la plus grande simplicité du moule en deux parties avec la capacité d'ouverture par recul radial des éléments qui s'éloignent radialement de l'axe du moule.

On assimile ici à "coquille" 4 aussi bien la pièce moulante que le support mécanique sur laquelle elle repose. Une couronne 5, dont le rôle est de commander le mouvement des éléments 10G (ou 10D) comme il est expliqué ci-dessous, est montée sur chacune des coquilles 4. Il va de soi cependant que cette disposition n'est pas limitative, et que ces pièces pourraient dans certaines réalisations être mobiles les unes par rapport aux autres.

Un cordon de centrage 181 est disposé sur la face latérale 18 des éléments 10G de la partie G. Il coopère avec une rainure correspondante réalisée sur la face latérale 18 des éléments 10D de l'autre partie. Le dos de chaque élément 10G, 10D, comporte une face de contact 19, en prise axialement avec un cerceau 50.

Le cerceau 50 est solidaire de quelques pistons 51, par exemple au moins trois répartis de façon équidistante sur la totalité de la circonférance du cerceau 50. Pour actionner chacun de ces pistons 51, un ressort 52 est disposé dans un logement 53. Le ressort prend appui d'une part sur la coquille 4, et d'autre part sur le piston 51, pour tendre à repousser celui-ci axialement vers l'intérieur jusqu'à ce qu'un épaulement 510 prévu à la base du piston 51 vienne en butée contre le fond 530 du logement 53 correpondant.

Une glissière 54, par exemple en queue d'aronde, est fixée d'une part sur le dos de chaque élément 10G, 10D, et d'autre part sur la paroi radialement inférieure d'une couronne 5. Cette glissière 54 constitue un dispositif assurant un degré de liberté de glissement entre éléments 10G ou 10D et couronne 5. Ledit glissement a lieu selon un axe incliné par rapport à l'axe du moule. L'angle d'inclinaison est choisi pour être non coinçant, par rapport aux sollicitations d'ouverture et de fermeture du moule, qui sont orientées parallèlement à l'axe du moule.

Dans la variante préférée de réalisation du moule décrite ci-dessus, il est possible d'obtenir tous les mouvements nécessaires aux opérations de moulage et de démoulage simplement en agissant sur les coquilles 4. Supposons que l'on parte de la position de fermeture (voir figure 6). Si l'on écarte axialement les coquilles 4 l'une de l'autre, alors, de par l'action des ressorts 52, les éléments 10G et 10D restent en contact les uns sur les autres via leurs faces latérales 18. Les éléments reculent radialement pour prendre la position illustrée par la figure 7. Ceci explique le mouvement d'ouverture du moule. De préférence, la course de recul radial "P" est juste supérieure à la profondeur de sculpture, car la suite de l'ouverture du moule se fait en poursuivant l'écartement radial relatif des coquilles 4.

Si on rapproche axialement les coquilles 4, alors, le seul mouvement possible des éléments 10G (ou 10D), en réponse au rapprochement axial des la coquilles 4, est un mouvement d'avance radiale vers la position de fermeture du moule. Ceci explique la fermeture du moule. Le mouvement de tous les éléments 10G (ou 10D) est de préférence simultané et symétrique. Le cordon de centrage 181 permet de garantir une parfaite symétrie.

Lorsqu'un tel moule est utilisé avec un noyau rigide moulant la surface interne du pneu, alors il comporte de préférence des moyens (non représentés) permettant de terminer la fermeture du moule par une petite course axiale des coquilles 4 après que l'ensemble des éléments 10G et 10D soit parvenu à sa position de fermeture. Ceci permet de procurer l'effet piston entre coquille et couronne, dont le rôle est décrit dans le brevet EP 0 242 840 (cité ci dessus).

L'invention s'étend aussi, ainsi qu'il a déjà été évoqué, à un procédé de fabrication d'un pneumatique utilisant un moule tel qu'il vient d'être décrit, et qui peut comporter un noyau rigide servant de support pour l'assemblage des constituants, puis servant d'élément moulant la cavité intérieure du pneumatique pendant la vulcanisation.

L'avantage qu'il y a à utiliser ce type de moule combiné avec un noyau rigide est que dans ce cas, cela confère au moule une certaine élasticité, c'est-à-dire une certaine capacité à augmenter légèrement le volume de la cavité de moulage pour suivre la dilatation du caoutchouc résultant de l'augmentation de température, tout en répartissant parfaitement les jeux entre pièces de moule. Ceci est obtenu en laissant reculer axialement les coquilles 4, ou plus exactement les couronnes 5, au delà d'une certaine pression prévalant dans la cavité de moulage du pneu. En outre, cela dispense de devoir fermer l'anneau moulant la bande de roulement en deux phases successives. Cela simplifie la presse et en limite l'encombrement dans le sens radial.

Bien entendu, le moule en deux parties du second mode de réalisation peut être utilisé avec des organes de répusion 13 décrits avec la première variante. Ceux-ci remplacent ou assistent les ressorts 52.

Quant aux bavures de moulage, on observe que les conditions de moulage les plus critiques apparaissent le long des sillons longitudinaux faisant le tout du pneu, et bien sûr dans les cas où il n'y a pas du tout de supplément de conformation. Les sillons longitudinaux sont moulés par des nervures qui ne peuvent être continues circonférentiellement. Ces nervures sont découpées en autant de tronçons qu'il y a d'éléments 10 (ou 10G ou 10D). On a noté expérimentalement que, même en utilisant un noyau rigide pour mouler l'intérieur du pneu, si au moment où les nervures du moule pénètrent dans le caoutchouc cru, la taille des écarts entre éléments est plus faible que 0.3 mm, alors il n'apparaît pas de bavure de moulage.

L'utilisation d'un nombre d'éléments 10 ou 10G ou 10D correspondant sensiblement au pas de sculpture conduit à avoir, pour les pneus de véhicules de tourisme, par exemple 70 éléments pour boucler la circonférence du pneu, donc 70 jeux entre éléments. Le cumul de tous les jeux vaut 0.3 x 70 = 21 mm. Cela correspond à une course radiale de 21 / 2π = 3.3 mm, correspondant sensiblement à la moitié de la profondeur de sculpture. Or on sait qu'il est possible de conférer au caoutchouc de la bande de roulement, vu en coupe radiale, un profil qui s'approche du profil du pneu vulcanisé. Il est ainsi possible que les nervures ne pénètrent pas dans le caoutchouc cru avant une course finale correspondant à une fraction de la profondeur de sculpture.

## Revendications

1. Moule pour bande de roulement de pneumatique, définissant en position de moulage un anneau continu (1) comportant un relief composé de motifs successifs répétitifs dans le sens circonférentiel, lesdits motifs assurant le moulage de la sculpture sur la surface radialement extérieure de la bande de roulement, ladite sculpture ayant un pas de sculpture où apparaissent des sillons transversaux, ledit moule étant constitué d'éléments (10, 10G, 10D) monobloc individuels, chacun desdits éléments ayant un développement circonférentiel correspondant au plus à deux motifs adjacents, lesdits éléments étant groupés dans le moule pour assurer le moulage de ladite bande de roulement par la face radialement intérieure de chaque élément, caractérisé en ce que lesdits éléments sont mobiles individuellement, selon une direction de rapprochement ou d'éloignement de l'axe du moule au moins sur une course finale de moulage, lesdits éléments étant également mobiles les uns par rapport aux autres au moins pendant qu'ils se déplacent le long de ladite course finale.

2. Moule selon la revendication 1, caractérisé en ce que ledit anneau continu (1) est constitué d'au moins 30 éléments (10, 10G, 10D) adjacents circonférentiellement en position de moulage.

3. Moule selon la revendication 1 ou 2, caractérisé en ce que lesdits éléments ont une dimension circonférentielle suffisamment faible pour que la différence entre les composantes circonférentielles extrêmes du déplacement observé en tous points de la surface moulante de chaque élément soit inférieure à 0.04 % du périmètre de moulage.

4. Moule selon l'une des revendications 1 à 3, caractérisé en ce que lesdits éléments sont répartis en un ou plusieurs groupes adjacents axialement, et en ce que, à l'intérieur d'un groupe, ils sont tous mobiles selon une direction faisant le même angle par rapport à la direction radiale.

5. Moule selon l'une des revendications 1 à 4, caractérisé en ce que lesdits éléments sont montés sur au moins cinq secteurs (11), avec jeu entre éléments, et en ce que, au cours du mouvement correspondant à ladite course, les éléments peuvent glisser circonférentiellement par rapport auxdits secteurs.

6. Moule selon l'une des revendications 1 à 4, caractérisé en ce que ledit anneau est divisé en deux parties (G, D) pouvant se séparer axialement, montées chacune sur une couronne (5), les couronnes pouvant être éloignées ou rapprochées axialement l'une de l'autre, chaque partie contenant au moins un groupe d'éléments (10G ou 10D).

7. Moule selon la revendication 6, caractérisé en ce que chaque partie (G ou D) comporte un seul groupe d'éléments, le dos de chaque élément comportant une face de contact (19) en prise axialement du côté extérieur avec un cerceau périphérique (50) continu, et en ce que des moyens exerçant une force d'extension ayant une composante parallèle à l'axe du moule sont disposés entre la couronne et le cerceau.

8. Moule selon la revendication 6 ou 7, caractérisé en ce que chaque élément est monté sur l'une des couronnes (5) par un dispositif (54) assurant un degré de liberté de glissement entre l'élément (10G ou 10D) et ladite couronne (5), ledit glissement ayant lieu selon un axe incliné par rapport à l'axe du moule, de sorte qu'un mouvement dans une direction axiale d'une couronne (5) entraîne un mouvement dans une direction radiale desdits éléments (10G ou 10D), au moins pendant ladite course correspondant à la profondeur de sculpture.

9. Moule selon l'une des revendications 1 à 8, caractérisé en ce qu'il comporte des moyens assurant une répulsion élastique entre éléments (10, 10G, 10D).

10. Moule selon l'une des revendications 1 à 9, caractérisé en ce que chacun desdits éléments comporte, sur l'une de ses faces transversales non moulante en regard d'une face transversale non moulante de l'élément adjacent, au moins un évidement (12) dans lequel est disposé un organe (13) assurant ladite répulsion élastique.

11. Moule selon l'une des revendications 1 à 10, caractérisé eu ce que chaque élémént a un développement circonférentiel correspondant à un seul motif.

12. Moule selon la revendication 6, 7 ou 8, caractérisé en ce que chaque élément est solidarisé sur une couronne par un dispositif (54) assurant un degré de liberté de glissement entre l'élément et ladite couronne, ledit glissement ayant lieu selon un axe incliné par rapport à l'axe du moule, de sorte qu'un mouvement dans une direction axiale d'une couronne entraîne un mouvement dans une direction radiale desdits éléments, au moins pendant ladite course correspondant à la profondeur de sculpture.

13. Procédé de fabrication d'un pneumatique, caractérisé en ce que l'on utilise un moule selon l'une des revendications 1 à 12.

14. Procédé de fabrication d'un pneumatique selon la revendication 13, caractérisé en ce que le pneumatique est progressivement assemblé sur un noyau rigide servant de support pour l'assemblage des constituants, puis servant d'élément moulant la cavité intérieure du pneumatique pendant la vulcanisation.

## Claims

1. A mould for a tyre tread, defining in the moulding position a continuous ring (1) comprising a relief formed of successive repeating motifs in the circumferential direction, said motifs ensuring the moulding of the tread pattern on the radially outer surface of the tread, said tread pattern having a pitch in which transverse grooves appear, said mould being formed of individual integral elements (10, 10G, 10D), each of said elements having a circumferential development corresponding at most to two adjacent motifs, said elements being grouped in the mould to ensure the moulding of said tread by the radially inner face of each element, characterised in that said elements are individually mobile, in a direction of approach towards or movement away from the axis of the mould at least over one final moulding distance, said elements also being mobile relative to one another at least while they are moving along said final distance.

2. A mould according to Claim 1, characterised in that said continuous ring (1) is formed of at least 30 circumferentially adjacent elements (10, 10G, 10D) in the moulding position.

3. A mould according to Claim 1 or 2, characterised in that said elements have a sufficiently small circumferential dimension for the difference between the extreme circumferential components of the displacement observed at all points on the moulding surface of each element to be less than 0.04% of the moulding perimeter.

4. A mould according to one of Claims 1 to 3, characterised in that said elements are distributed in one or more axially adjacent groups, and that, within a group, they are all mobile in one direction forming the same angle relative to the radial direction.

5. A mould according to one of Claims 1 to 4, characterised in that said elements are mounted on at least five sectors (11), with play between elements, and that, during the movement corresponding to said distance, the elements may slide circumferentially relative to said sectors.

6. A mould according to one of Claims 1 to 4, characterised in that said ring is divided into two parts (G, D) which can separate axially, each mounted on a crown (5), the crowns being able to be moved apart or together axially relative to each other, each part containing at least one group of elements (10G or 10D).

7. A mould according to Claim 6, characterised in that each part (G or D) comprises a single group of elements, the back of each element comprising a contact face (19), in axial engagement on the outer side with a continuous peripheral hoop (50), and in that means exerting an extension force having a component parallel to the axis of the mould are arranged between the crown and the loop.

8. A mould according to Claim 6 or 7, characterised in that each element is mounted on one of the crowns (5) by a device (54) which provides a degree of freedom in sliding between the element (10G or 10D) and said crown (5), said sliding taking place along an axis which is inclined relative to the axis of the mould, such that a movement in one axial direction of a crown (5) involves a movement in a radial direction of said elements (10G or 10D), at least over said distance corresponding to the depth of the tread pattern.

9. A mould according to one of Claims 1 to 8, characterised in that it comprises means ensuring elastic repulsion between elements (10, 10G, 10D).

10. A mould according to one of Claims 1 to 9, characterised in that each of said elements comprises, on one of its non-moulding transverse faces opposite a non-moulding transverse face of the adjacent element, at least one recess (12) in which there is arranged a member (13) ensuring said elastic repulsion.

11. A mould according to one of Claims 1 to 10, characterised in that each element has a circumferential development corresponding to a single motif.

12. A mould according to Claim 6, 7 or 8, characterised in that each element is made integral on a crown by a device (54) which provides a degree of freedom in sliding between the element and said crown, said sliding taking place along an axis which is inclined relative to the axis of the mould, such that a movement in one axial direction of a crown involves a movement in a radial direction of said elements, at least over said distance corresponding to the depth of the tread pattern.

13. A method for manufacturing a tyre, characterised in that a mould according to one of Claims 1 to 12 is used.

14. A method for manufacturing a tyre according to Claim 13, characterised in that the tyre is progressively assembled on a rigid core acting as a support for assembling the constituents, then serving as an element moulding the inner cavity of the tyre during vulcanisation.

## Patentansprüche

1. Form für eine Reifen-Lauffläche, die in der Formlage einen durchgehenden Ring (1) festlegt, der ein Relief aufweist, das aus in Umfangsrichtung aufeinanderfolgenden, sich wiederholenden Motiven zusammengesetzt ist, wobei die genannten Motive die Abformung des Profils auf der radial außen liegenden Seite der Lauffläche sicherstellen, das genannte Profil eine Profilteilung hat, wo querverlaufende Rillen auftreten, die genannte Form aus einzelnen, einstückigen Elementen (10, 10G, 10D) gebildet ist, jedes der genannten Elemente eine Umfangsabwicklung aufweist, die höchstens zwei benachbarten Motiven entspricht, und die genannten Elemente in der Form so gruppiert sind, daß die Abformung der genannten Lauffläche durch die radial innenliegende Fläche eines jeden Elements sichergestellt ist, dadurch gekennzeichnet, daß die genannten Elemente individuell in einer Richtung zum Annähern zur Formachse oder zum Entfernen von dieser mindestens auf einem Abform-Endhub beweglich sind, und daß die genannten Elemente auch zueinander mindestens dann beweglich sind, wenn sie sich längs des genannten Endhubes bewegen.

2. Form nach Anspruch 1, dadurch gekennzeichnet, daß der genannte, durchgehende Ring (1) aus mindestens 30 Elementen (10, 10G, 10D) gebildet ist, die in der Abformlage in Umfangsrichtung nebeneinanderliegen.

3. Form nach Anspruch 1 oder 2, dadurch gekennzeichnet, daß die genannten Elemente eine Umfangsabmessung aufweisen, die genügend gering ist, damit der Unterschied zwischen den äußersten Umfangskomponenten der beobachteten Bewegung in allen Punkten der abformenden Oberfläche eines jeden Elements kleiner als 0,04% des Abformumfangs ist.

4. Form nach einem der Ansprüche 1 bis 3, dadurch gekennzeichnet, daß die genannten Elemente in einer oder mehreren, axial nebeneinanderliegenden Gruppen verteilt sind, und daß im Inneren einer Gruppe alle, die in einer Richtung beweglich sind, den selben Winkel in Bezug auf die Radialrichtung aufweisen.

5. Form nach einem der Ansprüche 1 bis 4, dadurch gekennzeichnet, daß die genannten Elemente auf mindestens fünf Sektoren (11) mit Spiel zwischen den Elementen angebracht sind, und daß im Verlauf der Bewegung, die dem entsprechenden Hub entspricht, die Elemente in Umfangsrichtung in Bezug auf die genannten Sektoren gleiten können.

6. Form nach einem der Ansprüche 1 bis 4, dadurch gekennzeichnet, daß der genannte Ring in zwei Teile (G, D) unterteilt ist, die sich axial abtrennen können und jeweils auf einem Kranz (5) angebracht sind, und daß die Kränze axial voneinander entfernt oder aneinander angenähert werden können, wobei jeder Teil mindestens eine Gruppe von Elementen (10G oder 10D) enthält.

7. Form nach Anspruch 6, dadurch gekennzeichnet, daß jeder Teil (G oder D) eine einzige Gruppe von Elementen aufweist, wobei der Rücken eines jeden Elements eine Berührungsfläche (19) aufweist, die axial an der Außenseite in einen durchgehenden Umfangsring (50) eingreift, und daß die Mittel, die eine Dehnungskraft ausüben, die eine Komponente parallel zur Achse der Form aufweist, zwischen dem Kranz und dem Ring angeordnet sind.

8. Form nach Anspruch 6 oder 7, dadurch gekennzeichnet, daß jedes Element auf einem der Kränze (5) durch eine Vorrichtung (54) angebracht ist, die einen Freiheitsgrad für die Gleitbewegung zwischen dem Element (10G oder 10D) und dem genannten Kranz (5) aufweist, und daß die genannte Gleitbewegung längs einer Achse erfolgt, die in Bezug auf die Formachse geneigt ist, und zwar derart, daß eine Bewegung in einer Axialrichtung eines Kranzes (5) eine Bewegung in einer Radialrichtung der genannten Elemente (10G oder 10D) mindestens während des genannten Hubes herbeiführt, der der Tiefe des Profils entspricht.

9. Form nach einem der Ansprüche 1 bis 8, dadurch gekennzeichnet, daß sie Mittel aufweist, die eine elastische Abstoßung zwischen den Elementen (10, 10G, 10D) sicherstellt.

10. Form nach einem der Ansprüche 1 bis 9, dadurch gekennzeichnet, daß jedes der genannten Elemente auf einer seiner nicht-formenden Querflächen gegenüber einer nichtformenden Querfläche des benachbarten Elements mindestens eine Aussparung (12) aufweist, in der ein Organ (13) angeordnet ist, das die genannte elastische Abstoßung sicherstellt.

11. Form nach einem der Ansprüche 1 bis 10, dadurch gekennzeichnet, daß jedes Element eine Umfangsabwicklung aufweist, die einem einzigen Motiv entspricht.

12. Form nach Anspruch 6, 7 oder 8, dadurch gekennzeichnet, daß jedes Element auf einem Kranz durch eine Vorrichtung (54) fest angeordnet ist, die einen Freiheitsgrad für die Gleitbewegung zwischen dem Element und dem genannten Kranz sicherstellt, und daß die genannte Gleitbewegung in einer Achse erfolgt, die in Bezug auf die Achse der Form geneigt ist, und zwar derart, daß eine Bewegung in einer axialen Richtung eines Kranzes eine Bewegung in einer radialen Richtung der genannten Elemente mindestens während des genannten Hubes herbeiführt, der der Tiefe des Profils entspricht.

13. Verfahren zur Herstellung eines Reifens, dadurch gekennzeichnet, daß man eine Form nach einem der Ansprüche 1 bis 12 benutzt.

14. Verfahren zur Herstellung eines Reifens nach Anspruch 13, dadurch gekennzeichnet, daß der Reifen fortlaufend auf einem starren Kern konfektioniert wird, der als Träger zum Zusammenbau der Bestandteile dient und dann als Element dient, das den Innenhohlraum des Reifens während der Vulkanisierung abformt.
